Europäisches Patentamt

European Patent Office

Office européen des brevets

(19)

(11) Veröffentlichungsnummer : **0 051 722
B1**

(12) **EUROPÄISCHE PATENTSCHRIFT**

(45) Veröffentlichungstag der Patentschrift :
19.12.84

(51) Int. Cl.³ : **H 02 J 7/14, H 02 J 7/24**

(21) Anmeldenummer : 81106764.4

(22) Anmeldetag : 29.08.81

(54) **Batterieladesystem, insbesondere für Kraftfahrzeuge.**

(30) Priorität : 08.11.80 DE 3042194

(43) Veröffentlichungstag der Anmeldung :
19.05.82 Patentblatt 82/20

(45) Bekanntmachung des Hinweises auf die Patenterteilung : 19.12.84 Patentblatt 84/51

(84) Benannte Vertragsstaaten :
FR GB IT

(56) Entgegenhaltungen :
EP-A- 0 013 496
DE-A- 2 202 832
DE-A- 2 809 712
US-A- 3 942 096
US-A- 4 019 120

(73) Patentinhaber : **ROBERT BOSCH GMBH
Postfach 50
D-7000 Stuttgart 1 (DE)**

(72) Erfinder : **Gansert, Willi
Geschwister-Scholl-Strasse 34
D-7014 Kornwestheim (DE)**
Erfinder : **Kuhn, Edgar, Dipl.-Ing.
Aspergie 10
D-7016 Gerlingen (DE)**
Erfinder : **Munz, Ulrich
Lissenstrasse 36
D-7125 Kirchheim (DE)**

Jouve, 18, rue St-Denis, 75001 Paris, France

**Beschreibung**

Stand der Technik

Die Erfindung geht aus von einem Batterieladesystem nach der Gattung des Hauptanspruchs. Aus der DE-A1-28 09 712 ist ein Batterieladesystem bekannt, bei dem die Ladekontrolleinrichtung über eine erste Schwellwertstufe den Generatorstillstand bzw. einen Keilriemenbruch und über eine andere Schwellwertstufe ein fehlerhaftes Verhalten des Reglers anzeigt, wenn bei Überschreiten des Regelsollwertes der Generatorspannung der Leistungsschalter des Reglers stromleitend ist. Darüber hinaus ist eine weitere Schwellwertstufe vorgesehen, über welche eine Anzeige erfolgt, wenn bei Unterschreiten des Regelsollwertes der Generatorspannung der Leistungsschalter des Reglers fehlerhaft sperrt. Die Signaleingänge der Schwellwertstufen sind entsprechend ihrer Funktion mit einem Schaltpunkt im Generator verbunden, an den auch die Kathoden der Erkennungsdioden und die von der Batterie abgekehrte Klemme des Zündschalters angeschlossen sind. Mit dieser Anordnung lassen sich einige Störungen nicht erfassen, die in dem außerhalb des Generators liegenden Bordnetzteil des Batterieladesystems auftreten können. Insbesondere ist es nicht möglich, im Betrieb den Ladezustand der Batterie einwandfrei zu ermitteln und für eine Anzeige auszuwerten (Batteriesensing).

Vorteile der Erfindung

Die erfindungsgemäße Anordnung mit den kennzeichnenden Merkmalen des Hauptanspruchs hat demgegenüber den Vorteil, daß die erste Schwellwertstufe die Generatorspannung bzw. die Verhältnisse im Erregersystem des Generators, z. B. den Schaltzustand des Reglers, unverzögert und auch sonst unbeeinflußt durch den Ladezustand der Batterie erfaßt. Die andere Schwellwertstufe und gegebenenfalls weitere Schwellwertstufen erfassen unverfälscht den Ladezustand der Batterie oder das von der Batteriespannung abhängige Potential eines Sensinganschlusses, wodurch sich die Möglichkeit für eine Reihe weiterer Überwachungsfunktionen ergibt.

Durch die in den Unteransprüchen aufgeführ-ten Maßnahmen sind vorteilhafte Wei-terbildungen der im Hauptanspruch angegebe-nen Anordnung möglich.

In einer Anordnung nach Anspruch 2 lassen sich die gewünschten Überwachungsfunktionen der Ladekontrolleinrichtung mit vergleichsweise geringem Aufwand erzielen.

Besonders vorteilhaft ist es, wenn der Schwellwert der zur Erkennung eines Mindestwertes der Generatorspannung vorgesehenen ersten Schwellwertstufe nach Anspruch 3 bemessen ist. Die erste Schwellwertstufe signalisiert dann eindeutig, ob der laufende Generator erregt ist oder nicht.

Bei Bemessung der ersten Schwellwertstufe nach Anspruch 3 werden bei erregtem Generator unerwünschte Störanzeigen unterdrückt, wenn die erste Schwellwertstufe gemäß den Ansprüchen 4 und 5 mit weiteren Schaltmitteln verknüpft ist. Die Anordnung nach Anspruch 4 verhindert eine Störanzeige, wenn der Regler den Generator am Ende eines Ladevorgangs entregt, oder wenn bei gutgeladener Batterie aus dem Lastbetrieb heraus eine Lastabschaltung erfolgt. Die Anordnung nach Anspruch 5 unterdrückt bei entregtem Generator eine Störanzeige, sobald und solange die Batteriespannung bzw. die von dieser abhängige Spannung am Sensinganschluß einen um eine vorgegebene Differenz unterhalb des Regelsollwertes liegenden Mindestwert übersteigt.

Bei Lastzuschaltung und dadurch bedingter Absenkung der Batterie- bzw. Sensingspannung unter den Sollwert bzw. einen vorgegebenen Mindestwert schaltet der Regler den Erregerstrom wieder ein, worauf die Spannung am Fehler-erkennungsanschluß (D+) des Generators anzu-steigen beginnt. Um eine Störanzeige während der Zeit zu verhindern, in welcher die Generatorspannung den Schwellwert der ersten Schwellwertstufe noch nicht erreicht hat, wird ein Zeitverzögerungsglied vorgeschlagen, welches nach Anspruch 6 angeordnet und bemessen ist. Wenn nach Ablauf dieser Verzögerungszeit die Generatorspannung noch immer nicht den vorgegebenen Schwellwert erreicht hat, liegt eine Erregungsunterbrechung durch Reglerschaden oder eine Unterbrechung des zu dem Fehlererkennungsanchluß (D+) führenden Strompfades im Generator vor, die zu einer Störanzeige führt.

Die Anzeigevorrichtung wird auch angesteuert, wenn der vom Plusanschluß der Batterie bzw. vom Zündschalter abgekehrte Anschluß (DF) der Erregerwicklung des Generators einen Kurzschluß gegen Masse hat.

Eine Unterbrechung der vom Generator zur Batterie führenden Ladeleitung wird angezeigt, wenn die Ladekontrolleinrichtung nach Anspruch 8 weitergebildet ist. Zum Schutz der Anzeigevorrichtung gegen Überspannung kann eine zusätzliche Schwellwertstufe gemäß Anspruch 9 vorgesehen sein. Um in diesem Falle ein Anwachsen der Generatorspannung auf einen unzulässig hohen Wert zu vermeiden, können vorteilhaft die in den Ansprüchen 10 und 11 aufgeführten Mittel zur Notregelung des Generators vorgesehen sein.

Zum Anzeigen von Leitungsunterbrechungen im Bordnetz wird eine Weiterbildung des Ladesystems gemäß Anspruch 12 vorgeschlagen. Eine Unterbrechung der vom Zündschalter zur Erregerwicklung des Generators führenden Leitung kann durch die Mittel des Anspruchs 13 angezeigt werden. Bei einer Anordnung nach Anspruch 14 wird eine Unterbrechung der Ladeleitung angezeigt, wobei in diesem Fall der Regler auf dem normalen Spannungsniveau weiterregelt.

Zeichnung

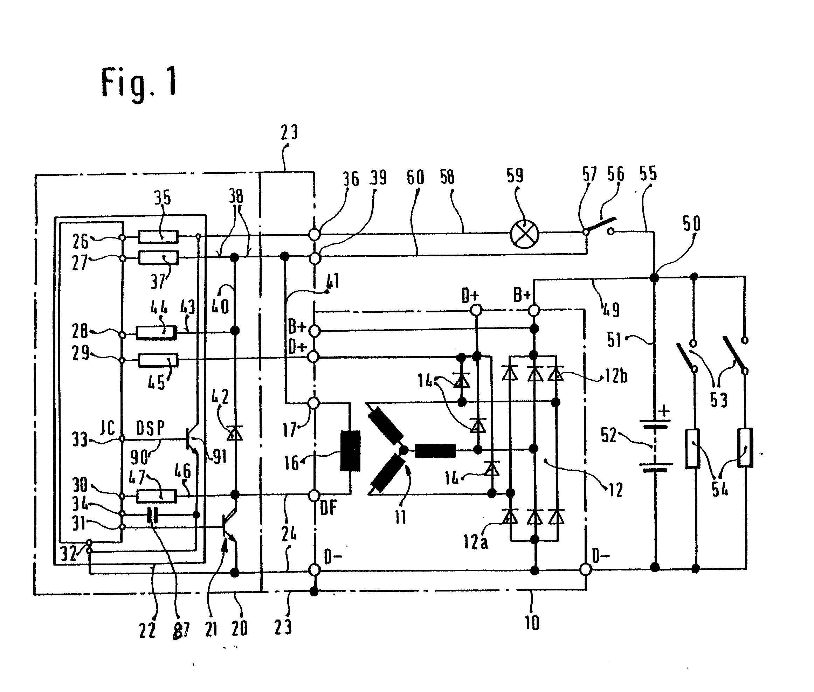

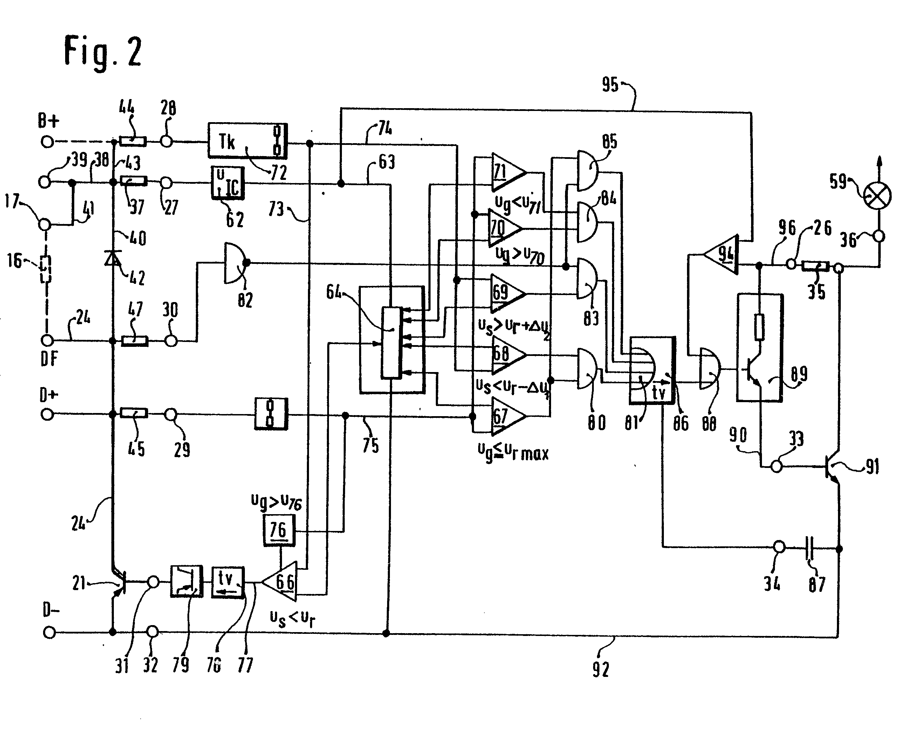

Ein Ausführungsbeispiel der Erfindung ist in der Zeichnung dargestellt und in der nachfolgenden Beschreibung näher erläutert. Es zeigt Fig. 1 ein vereinfachtes Schaltbild des gesamten Batterieladesystems und Fig. 2 ein Funktionsschaltbild des Reglers und der Ladekontrolleinrichtung des Systems nach Fig. 1.

Das Batterieladesystem hat einen Drehstromgenerator 10 mit einer Dreiphasenwicklung 11, welcher ein Hauptstrom-Gleichrichter 12 mit Minusdioden 12a und Plusdioden 12b nachgeschaltet ist. Der Gleichrichter 12 hat zwei als Masseverbindung des Generators dienende Minusanschlüsse D– und zwei Plusanschlüsse B+. Der Dreiphasenwicklung 11 sind außerdem nach Art eines halben Brückengleichrichters ein Satz Erkennungsdioden 14 nachgeschaltet, deren Kathoden mit zwei weiteren Plusanschlüssen D+ des Generators verbunden sind. Der Generator hat ferner eine Erregerwicklung 16, die mit einem Anschluß DF und einem Anschluß 17 des Generators verbunden ist.

An den Drehstromgenerator 10 ist ein Spannungsregler 20 angebaut, der einen elektronischen Leistungsschalter 21 und ein Steuerteil 22 hat und mit einem Bürstenhalter 23 eine Baueinheit bildet. Der Leistungsschalter 21 liegt im Zuge einer Leitung 24, die von dem Anschluß DF zu dem Minusanschluß D– des Bürstenhalters 23 führt. Diese beiden Anschlüsse des Bürstenhalters 23 sind mit dem entsprechenden Anschluß DF und dem Minusanschluß D– des Drehstromgenerators 10 verbunden. Der zum Teil als integrierte Schaltung ausgebildete Steuerteil 22 hat neun Anschlüsse 26 bis 34, von denen der Anschluß 26 über einen Widerstand 35 mit einem Anschluß 36 des Bürstenhalters 23 und der Anschluß 27 über einen Widerstand 37 und eine weiterführende Leitung 38 mit einem Anschluß 39 des Bürstenhalters 23 verbunden ist. Von der Leitung 38 zweigen Leitungen 40 und 41 ab, von denen die eine Leitung 40 über eine Freilaufdiode 42 zum Kollektor des Leistungsschalters 21 und zum Anschluß DF, und die andere Leitung 41 zum Anschluß 17 des Bürstenhalters 23 führt.

Der Anschluß 28 des Steuerteils 22 ist über eine Leitung 43, die einen Widerstand 44 enthält, mit der Leitung 40 und der Anschluß 29 über einen Widerstand 45 mit einem Plusanschluß D+ des Bürstenhalters 23 verbunden, der an den Plusanschluß D+ des Generators 10 angeschlossen ist. Vom Anschluß 30 führt eine Leitung 46 über einen Widerstand 47 und über den Kollektoranschluß des Leistungsschalters 21 zum Anschluß DF und der Anschluß 31 ist an den Steuereingang des Leistungsschalters 21 angeschlossen. Über den Anschluß 32 ist das Steuerteil 22 mit dem Emitter des Leistungsschalters 21 und dem Minusanschluß D– verbunden. Mit den Anschlüssen 33 und 34 des Steuerteils 22 sind diskrete Bauteile einer Ladekontrolleinrichtung verbunden, die später noch beschrieben werden.

An den einen Plusanschluß B+ des Drehstromgenerators 10 ist über eine Leitung 49 ein Schaltpunkt 50 des Bordnetzes angeschlossen, von welchem eine Leitung 51 zum Plusanschluß einer Batterie 52 führt, deren anderer Anschluß über den Minusanschluß D– des Generators an Masse liegt. Mit dem Schaltpunkt 50 sind ferner über Schalter 53 die elektrischen Verbraucher 54 des Fahrzeugs angeschlossen. Außerdem führt vom Schaltpunkt 50 eine Leitung 55 zu einem Zündschalter 56, dessen von der Batterie abgekehrte Klemme 57 über eine Leitung 58, in der eine Kontrollampe 59 liegt, mit dem Anschluß 36 und über eine zweite Leitung 60 mit dem Anschluß 39 des Spannungsreglers 20 bzw. Bürstenhalters 23 verbunden ist.

Im Steuerteil 22 ist der Anschluß 27 mit einer Konstantspannungquelle 62 (Fig. 2) verbunden, von der eine Leitung 63 zu einem Spannungsteiler 64 und von dort weiter zum Anschluß 32 führt. Der Spannungsteiler 64 liefert die Referenzspannungen für sechs Schwellwertstufen 66 bis 71, deren Funktion später noch näher beschrieben ist. Der Anschluß 28 des Steuerteils ist mit einem Schaltteil 72 zur Temperaturanpassung verbunden, von welchem Leitungen 73 und 74 zu den zweiten Eingängen der Schwellwertstufen 66, 68 und 69 führen. Die zweiten Eingänge der Schwellwertstufen 67, 70 und 71 sind über eine Leitung 75 mit dem Anschluß 29 des Steuerteils 22 verbunden, an welche auch ein Schaltteil 76 zur Notregelung des Generators angeschlossen ist. Der Ausgang des Schaltteils 76 ist mit der Schwellwertstufe 66 verbunden, von deren Ausgang eine Leitung 77 über ein Zeitglied 78 und eine Verstärkerschaltung 79 zum Anschluß 31 des Steuerteiles führt.

Die Ausgangssignale der Schwellwertstufen 67 und 68 sind einer UND-Verknüpfung 80 zugeführt, deren Ausgang an eine ODER-Verknüpfung 81 angeschlossen ist. Das Ausgangssignal der Schwellwertstufe 69 und das Ausgangssignal eines an den Anschluß 30 angeschlossenen Inverters 82 sind einer UND-Verknüpfung 83 zugeführt, die ausgangsseitig ebenfalls an die ODER-Verknüpfung 81 angeschlossen ist. An diese sind ferner zwei weitere UND-Verknüpfungen 84 und 85 angeschlossen, von denen die eine UND-Verknüpfung 84 eingangsseitig von den Ausgangssignalen der Schwellwertstufen 70 und 71 und die andere UND-Verknüpfung 85 von den Ausgangssignalen der Schwellwertstufe 67 und des Inverters 82 angesteuert ist.

Die ODER-Verknüpfung 81 ist mit einem Zeitglied 86 kombiniert, das einen Kondensator 87 hat. Der Kondensator 87 ist als diskretes Bauteil ausgeführt und über den Anschluß 34 mit dem elektronischen Zeitglied 86 verbunden. Das Zeitglied 86 steuert eine weitere ODER-Verknüpfung 88 an, deren Ausgang ein Schaltglied 89 in einer Steuerleitung 90 eines elektronischen Schalters 91 beeinflußt, welcher in einer die Anschlüsse 26 und 32 des Steuerteils verbindenden Leitung 92 liegt. Die Steuerleitung 90 ist über den Anschluß 33 des Steuerteils 22 zum Schalter 91 geführt. Ein zweiter Signaleingang der ODER-Verknüpfung 88 ist mit dem Ausgang eines Komparators 94 verbunden, dessen erster Eingang über eine Leitung 95 mit der Leitung 63 und dessen zweiter Eingang über eine Leitung 96 mit dem Anschluß 26 des Steuerteils verbunden ist.

Die beschriebenen Schaltungsteile sind wie folgt ausgelegt :

Die Schwellwertstufe 66 liefert ein den Leistungsschalter 21 durchsteuerndes positives Ausgangssignal, sobald und solange die Sensingspannung $u_s$ am Sensingeingang des Reglers die Regelsollwertspannung $u_r$ unterschreitet. Beim Ausführungsbeispiel nach Fig. 2 dient als Sensingeingang der Anschluß 39 des Reglers 20 bzw. Bürstenhalters 23, der mit der batteriefernen Klemme 57 des Zündschalters verbunden ist. Als Sensinganschluß kann aber auch einer der Plusanschlüsse B+ des Drehstromgenerators 10 dienen, wie in Fig. 2 angedeutet ist.

Die Schwellwertstufe 67 gibt ein zum Durchsteuern des Schalters 91 und Einschalten der Kontrollampe 59 notwendiges positives Ausgangssignal « 1 » ab, sobald und solange die Generatorspannung $u_g$ am Fehlererkennungsanschluß (Plusanschluß D+), also die vom Generator tatsächlich erzeugte Spannung, nicht über der Spannung $u_{rmax}$ liegt, die sich allein aufgrund der Remanenz des Erregersystems bei der höchstmöglichen Drehzahl des Generators ergibt. Die Schwellwertstufe 68 gibt ein zum Durchsteuern des Schalters 91 notwendiges positives Ausgangssignal « 1 » ab, sobald und solange die Sensingspannung $u_s$ am Anschluß 27 bzw. am Plusanschluß B+ des Reglers die Regelsollwertspannung $u_r$ um eine vorgegebene Differenz $\Delta u_1$ unterschreitet.

Die Schwellwertstufe 69 dagegen spricht im Sinne einer Störanzeige positiv an, wenn die Sensingspannung $u_s$ die Regelsollwertspannung $u_r$ um einen vorgegebenen Wert $\Delta u_2$ überschreitet.

Die eingangsseitig an den Fehlererkennungsanschluß (Plusanschluß D+) angeschlossene Schwellwertstufe 70 gibt ein im Sinn einer Störanzeige positives Ausgangssignal « 1 » ab, wenn die Generatorspannung $u_g$ einen Grenzwert $u_{70}$, z. B. 17 Volt übersteigt. Die zum Schutz der Kontrollampe 59 vor Überlastung vorgesehene Schwellwertstufe 71 liefert ein positives Ausgangssignal « 1 », solange die am Fehlererkennungsanschluß (Plusanschluß D+) herrschende Generatorspannung $u_g$ unterhalb eines oberen Grenzwertes $u_{71}$, z. B. 24 Volt, liegt. Das Schaltteil 76 spricht im Sinn einer Sperrung des Leistungsschalters 21 im Regler 20 an, wenn die Generatorspannung $u_g$ einen Grenzwert $u_{76}$, z. B. 18 Volt, übersteigt.

Der Komparator 94 liefert ein Einschaltsignal « 1 » für die Kontrollampe 59, wenn die Sensingspannung $u_s$ am Anschluß 27 des Reglers unterbrochen ist. Das ist dann der Fall, wenn der zur Erregerwicklung 16 des Generators führende Strompfad zwischen Zündschalter 56 und Anschluß 39 des Reglers unterbrochen ist. Der Komparator 94 schaltet in diesem Fall so um, daß er seine Stromversorgung über die Kontrollampe 59 bezieht und daraus das positive Einschaltsignal für diese bildet.

Das Zeitglied 86 ist so ausgelegt, daß seine Einschaltverzögerungszeit mindestens der Zeitspanne entspricht, in welcher die Generatorspannung beim Anlaufen des Generators von der minimal möglichen Remanenzspannung, die ungefähr 0 Volt beträgt, bis zur maximal möglichen Remanenzspannung bei minimaler Betriebsdrehzahl ansteigt.

Das beschriebene System arbeitet bezüglich der Ladung der Batterie und Konstanthaltung der Batteriespannung wie ein bekanntes System mit Fremderregung des Generators, so daß hierauf nicht weiter eingegangen werden soll.

Im folgenden ist die Arbeitsweise der Ladekontrolleinrichtung und der Notregelung des Systems anhand der nachstehend aufgeführten möglichen Betriebsfälle beschrieben :

1 Normalbetrieb
1.1 Startfall (Generatorstillstand)
1.2 Generatoranlauf bei intakter Anlage
1.3 Generatorüberlastung bei intakter Anlage
1.4 Lastabschaltungen mit Batterie bei intakter Anlage
2 Fehlerbetrieb
2.1 Keilriemenbruch
2.2 Erregungsunterbrechung durch Reglerschaden
2.3 Erregungsunterbrechung im Generator
2.4 Vollerregung durch Kurzschluß im Regler
2.5 Unterbrechung der Batterie-Ladeleitung
2.6 Unterbrechung der Erregerleitung zwischen Zündschalter und Regler.

1.1 Startfall (Generatorstillstand) :

Bei stehendem Generator unterschreitet die Batteriespannung die Regelsollwertspannung $u_r$. Der Sensingpfad, der über den Zündschalter 56 und die Leitung 60 zum Reglereingang und von dort weiter über den Schaltteil 72 zur Schwellwertstufe 66 führt, liegt auf einer niedrigeren Spannung als sein Referenzzweig am Spannungsteiler 64. Der Leistungsschalter 21 des Reglers wird durchgesteuert, wodurch das Potential am Anschluß DF auf das Signal « 0 » sinkt. Die Generatorspannung $u_g$ am Fehlererkennungsausgang (Plusanschluß D+) führt bei stehendem Generator keine Spannung. Die Schwellwertstufe 67 legt daher an den einen Eingang der UND-Verknüpfung 80 das Signal « 1 ».

Vom Anschluß DF, der das Signal « 0 » hat, gelangt über den Inverter 82 ebenfalls Signal « 1 » an die UND-Verknüpfungen 83 und 85. Die UND-Verknüpfung 85 steuert damit über das Zeitglied 86, die ODER-Verknüpfung 88 und das Zeitglied 89 über den Schalter 91 die Kontrollampe 59 an.

## 1.2 Generatoranlauf bei intakter Anlage :

Der Leistungsschalter 21 des Reglers ist eingeschaltet und bleibt eingeschaltet, bis die Sensingspannung $u_s$ an der Sensingleitung die Regelspannung $u_r$ überschreitet. Das kann z. B. bei einer Generatordrehzahl von $n = 1\ 200\ min^{-1}$ der Fall sein. Bei ansteigender Generatordrehzahl steigt auch die Generatorspannung $u_g$ am Fehlererkennungsausgang (Plusanschluß D+) an. Überschreitet die Generatorspannung $u_g$ den Schwellwert $u_{rmax}$ der Schwellwertstufe 67, schaltet diese ihren Ausgang und somit die einen Eingänge der UND-Verknüpfungen 80 und 85 auf « 0 » um. Damit wird das Stillstandsanzeigesignal der UND-Verknüpfung 85 aufgehoben und die eventuell ebenfalls erfolgte Anzeige, die bei Abfallen der Sensingspannung $u_s$ unter den Schwellwert $u_r - \Delta u_1$, der Schwellwertstufe 68 von dieser ausgelöst wird, wird durch logisch « 0" » an den einen Eingang der UND-Verknüpfung 80 ebenfalls aufgehoben.

## 1.3 Generatorüberlastung bei intakter Anlage :

In diesem Fall fällt die Sensingspannung $u_s$ unter die Regelsollwertspannung $u_r$ ab. Unterschreitet die Sensingspannung $u_s$ den Schwellwert der Schwellwertstufe 68, so legt diese das Signal « 1 » an den einen Eingang der UND-Verknüpfung 80. Bei intakter Anlage und drehendem Generator muß aber der Regler bei Unterschreiten der Regelsollwertspannung $u_r$ eingeschaltet haben. Die Generatorspannung $u_g$ am Fehlererkennungsausgang (Plusanschluß D+) ist größer als die maximal mögliche Remanenzspannung $u_{rmax}$. Die Schwellwertstufe 67 legt daher an den anderen Eingang der UND-Verknüpfung 80 « 0 »-Signal. Eine Störanzeige bei $u_s < u_r - \Delta u_1$ wird also bei intakter Anlage und drehendem Generator unterdrückt.

## 1.4 Lastabschaltungen mit Batterie bei intakter Anlage :

In diesem Betriebsfall können Spannungssprünge an der Sensingleitung auftreten und die Sensingspannung $u_s$ den Wert $u_r + \Delta u_2$ überschreiten. Dabei spricht die Schwellwertstufe 69 an und legt an den einen Eingang der UND-Verknüpfung 83 ein « 1 »-Signal. Da bei Überschreiten der Regelspannung der funktionsfähige Regler den Leistungsschalter 21 sperrt, liegt das Potential am Anschluß DF auf « 1 ». Der Inverter 82 bildet daraus das Signal « 0 » und legt dieses an den 2. Eingang der UND-Verknüpfung 83. Das hat zur Folge, daß auch am Ausgang der UND-Verknüpfung 83 das Signal « 0 » erscheint und eine Störanzeige von Überspannungen an der Sensingleitung bei ausgeschaltetem Regler unterbleibt.

Nach Abschaltung der Last steigt die Sensingspannung $u_s$ an der Sensingleitung über die Regelsollwertspannung $u_r$ an, wodurch der Leistungsschalter 21 in den Sperrzustand überführt und der Generator entregt wird. Dabei springt das Ausgangssignal des Inverters 82 auf das Signal « 0 », so daß über die Schwellwertstufe 69 eine Störanzeige nicht ausgelöst werden kann.

Bei Lastabschaltungen mit Batterie kann der Fall vorkommen, daß das Bordnetz so belastet ist, daß der benötigte Strom durch den Generator geliefert wird. Die vorher gut geladene Batterie wird dabei nicht entladen. Wird nun die Last abgeschaltet, fließt der Strom, abklingend mit der Generatorzeitkonstanten, in die Batterie weiter. Dadurch wird die Batteriespannung und die Sensingspannung $u_s$ angehoben. Die Batteriespannung klingt mit der Batteriezeitkonstanten ab. Da die Batteriezeitkonstante jedoch größer als die Generatorzeitkonstante sein kann, wird der Generator entregt. Dadurch sinkt die Generatorspannung $u_g$ am Fehlererkennungsausgang (Plusanschluß D+) mit der Generatorzeitkonstanten auf die Remanenzspannung ab. Diese ist kleiner als die maximal mögliche Remanenzspannung. Dadurch werden folgende Vorgänge ausgelöst :

a) Die Schwellwertstufe 67 legt das Signal « 1 » an den einen Eingang der UND-Verknüpfung 80. Da die Sensingspannung $u_s$ an der Sensingleitung aber größer als die Regelsollwertspannung $u_r$ ist, legt die Schwellwertstufe 68 das Signal « 0 » an den anderen Eingang der UND-Verknüpfung 80, so daß keine Störanzeige erfolgt.

b) Hat die Sensingspannung $u_s$ die Schaltschwelle $u_r + \Delta u_2$ der Schwellwertstufe 69 überschritten, legt diese an den einen Eingang der UND-Verknüpfung 83 das Signal « 1 ». Da der Leistungsschalter 21 sperrt, legt der Inverter 82 an den anderen Eingang der UND-Verknüpfung 83 das Signal « 0 », so daß auch über diesen Weg keine Störanzeige erfolgt.

c) Die Schwellwertstufe 67 legt an den einen Eingang der UND-Verknüpfung 85 das Signal « 1 », wogegen der andere Eingang dieses Gatters vom Inverter 82 das Signal « 0 » erhält. Daher wird auch über die UND-Verknüpfung 85 die Kontrollampe 59 nicht angesteuert.

Wird nun während der Zeit, in der der Generator noch entregt ist, durch Lastzuschaltung die Sensingspannung $u_s$ an der Sensingleitung unter die Regelsollwertspannung $u_r$ abgesenkt, schaltet der Regler den Leistungsschalter 21 wieder durch, und es wird folgender Ablauf ausgelöst :

Die Generatorspannung $u_g$ am Fehlererkennungsausgang (Plusanschluß D+) steigt nach dem Einschalten des Reglers wieder an, ist aber für eine gewisse Zeit noch kleiner als die Ansprechschwelle der Schwellwertstufe 67. Während dieser Zeit bleibt das « 1 »-Signal am Ausgang der Schwellwertstufe 67 stehen. Wenn die Sensingspannung $u_s$ unter den Schwellwert $u_r - \Delta u_1$ der Schwellwertstufe 68 abfällt, gelangt auch über diese das Signal « 1 » an die UND-Verknüpfung 80, so daß an dessen Ausgang ebenfalls das Signal « 1 » erscheint und das Zeitglied 86 angesteuert wird.

Darüber hinaus liegt auch an beiden Eingängen der UND-Verknüpfung 85 das Signal « 1 » an, weil die Generatorspannung $u_g$ kleiner als der Schwellwert der Schwellwertstufe 67 ist und der Leistungsschalter 21 durchgesteuert hat. Daher wird auch über die UND-Verknüpfung 85 das Zeitglied 86 angesteuert. Das Zeitglied 86 bleibt nun je nach Größe der Sensingspannung $u_s$ entweder durch beide UND-Verknüpfungen 80 und 85 oder allein durch die UND-Verknüpfung 85 solange angesteuert, bis die Spannung am Fehlererkennungsanschluß (Plusanschluß D+) die maximal mögliche Remanenzspannung wieder überschritten hat, wobei die Schwellwertstufe 67 auf das Signal « 0 » umschaltet und beide UND-Verknüpfungen 80 und 85 sperrt. Infolge der schon vorstehend beschriebenen Bemessung der Zeitglieds 86 wird über die Dauer dieses Vorgangs die Kontrollampe 59 nicht eingeschaltet.

2.1 Keilriemenbruch :

In diesem Falle arbeitet die Kontrolleinrichtung wie im Generatorstillstand, wobei in diesem Fall die aufleuchtende Kontrollampe 59 eine Störung anzeigt.

2.2 Erregungsunterbrechung durch Reglerschaden :

Wenn der Leistungsschalter 21 im Regler fehlerhaft sperrt, sinkt die Generatorspannung $u_g$ am Fehlererkennungsanschluß (Plusanschluß D+) auf die Remanenzspannung ab, wodurch die Schwellwertstufe 67 das Signal « 1 » an den einen Eingang der UND-Verknüpfung 80 legt. Bei fehlerhaft gesperrtem Leistungsschalter 21 sinkt ferner auch die Sensingspannung $u_s$ an der Sensingleitung ab. Wenn diese Spannung den Schwellwert $u_r - \Delta u_1$ unterschreitet, legt auch die Schwellwertstufe 68 ein positives Signal an den zugehörigen Eingang der UND-Verknüpfung 80, wodurch die Kontrollampe 59 angesteuert und eine Störung angezeigt wird.

2.3 Erregungsunterbrechung im Generator :

Durch eine Unterbrechung des Erregerstromkreises im Generator, z. B. im Bereich des Bürstenhalters 23, erscheint am Fehlererkennungsanschluß (Plusanschluß D+) die Remanenzspannung. Dadurch steuert die Schwellwertstufe 67 die UND-Verknüpfung 85 im Sinne einer Störanzeige an. Weil durch die Erregungsunterbrechung auch die Sensingspannung $u_s$ unter die Regelsollwertspannung $u_r$ fällt, schaltet der Leistungsschalter 21 ein, wodurch das Potential am Anschluß DF auf « 0 » fällt. Dabei legt auch der Inverter 82 das Signal « 1 » an den zugeordneten Eingang der UND-Verknüpfung 85, wodurch über das Zeitglied 86 die Kontrollampe 59 angesteuert wird. Erregungsunterbrechungen im Generator werden wie Generatorstillstand ausgewertet.

2.4 Vollerregung durch Kurzschluß im Regler :

Im Regler könnte fehlerhaft ein Kurzschluß vom Anschluß DF nach Masse auftreten. Dabei erscheint am Ausgang des Inverters 82 das Signal « 1 » und wegen der gleichzeitig über den Wert $u_r + \Delta u_2$ ansteigenden Sensingspannung $u_s$ steuert auch die Schwellwertstufe 69 die UND-Verknüpfung 83 im Sinne einer Störanzeige positiv an. Damit erscheint auch am Ausgang der UND-Verknüpfung 83 ein positives Signal, welches die Kontrollampe 59 einschaltet.

2.5 Unterbrechung der Batterieladeleitung :

Wenn eine Unterbrechung in der Batterieladeleitung zwischen dem Plusanschluß B+ des Generators und dem Plusanschluß der Batterie 52 auftritt, kann die Batterie nicht mehr geladen werden. Ihre Spannung sinkt unter die Regelsollwertspannung $u_r$ ab, was über den Zündschalter 56 und die Leitung 60 dem Regler mitgeteilt wird. Durch die Absenkung der Batteriespannung wird der Leistungsschalter 21 im Regler durchgesteuert. Die Spannung am Plusanschluß B+ des Generators und am Fehlererkennungsanschluß (Plusanschluß D+) steigt an, wobei sich abhängig von der Drehzahl Spannungen größer als 150 Volt einstellen könnten, wenn keine zusätzlichen Maßnahmen getroffen werden.

Der Spannungsanstieg am Fehlererkennungsanschluß (Plusanschluß D+) wird durch die Schwellwertstufe 70 erfaßt und als « 1 »-Signal an die UND-Verknüpfung 84 weitergegeben. Gleichzeitig gelangt auch über die Schwellwertstufe 71 das gleiche Signal an die UND-Verknüpfung 84, so daß die Anzeigevorrichtung angesteuert wird. Wenn die Generatorspannung $u_g$ am Plusanschluß D+ weiter steigt und den Schwellwert der Schwellwertstufe 71 erreicht, wandelt diese das Ausgangssignal « 1 » in das Signal « 0 », wodurch die Kontrollampe 59 erlischt. Diese Maßnahme dient zum Schutz der Kontrollampe 59 gegen Überspannung.

Neben dieser Störanzeige sieht die erfindungsgemäße Anordnung auch eine Notregelung des Generators vor. Wenn die Generatorspannung $u_g$ am Fehlererkennungsanschluß (Plusanschluß D+) die Schwelle des Schaltteils 76, beispielsweise 18 Volt erreicht, greift das Schaltteil 76 in den Regelvorgang von der Sensingleitung her ein und begrenzt dadurch die Spannung am Plusanschluß B+ des Generators und am Fehlererkennungsanschluß (Plusanschluß D+) auf einen vorbestimmten Wert.

2.6 Unterbrechung der Erregerleitung zwischen Zündschalter und Regler :

Wird die Leitung 60 zwischen dem Regler und dem Zündschalter 56 unterbrochen, dann fällt der Erregerstrom für den Generator sowie die Stromversorgung für die Anzeigevorrichtung der Anlage aus. Für die Anlage ist dies gleichbedeutend mit einer Erregungsunterbrechung im Generator. Die Anzeigevorrichtung kann diese Unterbrechung wegen des Ausfalls der Stromversorgung jedoch nicht auswerten. Der Komparator 94 erkennt jedoch, daß die Spannung an seinem mit Leitung 63 verbundenen Eingang weit unter die Spannung des mit dem Anschluß 26 verbundenen Eingangs abgesunken ist. Der Komparator 94 schaltet daraufhin so um, daß er seine Stromversorgung über die Kontrolllampe 59 und den Anschluß 26 bezieht und daraus das « 1 »-Signal für die Durchsteuerung des Schalters 91 bildet und dadurch trotz Unterbrechung der Leitung 60 eine Störanzeige ermöglicht.

**Ansprüche**

1. Batterieladesystem, insbesondere für Kraftfahrzeuge, mit einem ein Erregersystem und ein Gleichrichtersystem enthaltenden Wechselstromgenerator (10) zur Speisung einer elektrischen Batterie (52), mit einem Halbleiter-Spannungsregler (20) zum Konstanthalten der Generatorspannung, der einen in Reihe zur Erregerwicklung (16) liegenden Leistungsschalter (21) hat, und mit einer Ladekontrolleinrichtung, welche einen Signalgeber (82) zur Erkennung des Schaltzustandes des Leistungsschalters (21), eine erste Schwellwertstufe (67) zur Erkennung eines Mindestwertes der Generatorspannung und eine zweite Schwellwertstufe (69) zur Erkennung einer um einen bestimmten Wert ($\Delta u_2$) über dem Regelsollwert ($u_r$) liegenden Spannung ($u_r + \Delta u_2$) an einem Sensingpunkt des Systems hat, deren Ausgangssignale einer logischen Verknüpfungsschaltung zugeführt sind, welche eine Anzeigevorrichtung (59) steuert, dadurch gekennzeichnet, daß der eine Signaleingang der ersten Schwellwertstufe (67) mit einem von der Batteriespannung entkoppelten, von Erkennungsdioden (14) im Erregersystem des Wechselstromgenerators (10) gespeisten Fehlererkennungsanschluß (D+) und der eine Signaleingang der zweiten Schwellwertstufe (69) mit einem von der Batteriespannung beeinflußten Sensinganschluß (60 bzw. B+) verbunden ist.

2. System nach Anspruch 1, dadurch gekennzeichnet, daß die Erregerwicklung (16) des Generators auch im Betrieb durch die Batterie (52) gespeist und der Fehlererkennungsanschluß (D+) allein durch einen nach Art eines halben Brückengleichrichters geschalteten Satz von Erkennungsdioden (14) mit Spannung versorgt ist.

3. System nach Anspruch 1 oder 2, dadurch gekennzeichnet, daß die erste Schwellwertstufe (67) bei einem Mindestwert der Generatorspannung ($u_g$) anspricht, welche über dem allein von der Remanenz des Erregersystems bei Höchstdrehzahl des Generators hervorgerufenen Spannungswert ($u_{rmax}$) liegt.

4. System nach einem der Ansprüche 1 bis 3, dadurch gekennzeichnet, daß die Ausgangssignale der ersten Schwellwertstufe (67) und des zur Erkennung des Schaltzustandes des Leistungsschalters (21) dienenden Signalgebers (82) einer logischen UND-Schaltung (85) zugeführt sind, welche eine Anzeige nur auslöst, wenn der Leistungsschalter (21) stromleitend ist und die Generatorspannung ($u_g$) nicht größer als der Schwellwert der ersten Schwellwertstufe (67) ist.

5. System nach einem der Ansprüche 1 bis 4, dadurch gekennzeichnet, daß die Ausgangssignale der ersten Schwellwertstufe (67) und einer weiteren Schwellwertstufe (68), die zur Erkennung einer um einen bestimmten Wert ($\Delta u_1$) unter dem Regelsollwert ($u_r$) liegenden Sensingspannung ($u_s$) dient, einer logischen UND-Schaltung (80) zugeführt sind, welche eine Anzeige nur auslöst, wenn die Generatorspannung ($u_g$) nicht größer als der Schwellwert der ersten Schwellwertstufe (67) und die Sensingspannung ($u_s$) kleiner als der Schwellwert der weiteren Schwellwertstufe (68) ist.

6. System nach den Ansprüchen 4 und 5, dadurch gekennzeichnet, daß den beiden UND-Schaltungen (85, 80) der ersten Schwellwertstufe (67) mit dem Signalgeber (82) und der weiteren Schwellwertstufe (68) ein Zeitverzögerungsglied (86) nachgeschaltet ist, dessen Verzögerungszeit mindestens der Anstiegzeit der Spannung am Fehlererkennungsanschluß (D+) von der minimal möglichen Remanenzspannung zur maximal möglichen Remanenzspannung bei minimaler Betriebsdrehzahl des Generators entspricht.

7. System nach Anspruch 6, dadurch gekennzeichnet, daß auch einer UND-Schaltung (83) des Signalgebers (82) mit der Überspannungen an der Batterie bzw. einem Sensingpunkt erfassenden Schwellwertstufe (69) das Zeitverzögerungsglied (86) nachgeschaltet ist.

8. System nach einem der vorhergehenden Ansprüche, dadurch gekenzeichnet, daß der Fehlererkennungsanschluß (D+) des Generators mit dem Signaleingang einer weiteren, die Anzeigevorrichtung (59) ansteuernden Schwellwertstufe (70) verbunden ist, deren Schwellwert über jenem der die Sensing-Überspannung erfassenden Schwellwertstufe (69) liegt.

9. System nach Anspruch 8, dadurch gekennzeichnet, daß der Fehlererkennungsanschluß (D+) mit dem Signaleingang einer weiteren Schwellwertstufe (71) verbunden ist, deren Schwellwert größer als jener der die Anzeigevorrichtung (59) ansteuernden Schwellwertstufe (70) ist, und daß die Ausgangssignale dieser beiden Schwellwertstufen (70, 71) einer UND-Schaltung (84) zugeführt sind, welche eine Anzeige unterdrückt, wenn die weitere Schwellwertstufe (71) angesprochen hat.

10. System nach einem der vorhergenden Ansprüche, dadurch gekennzeichnet, daß der Fehlererkennungsanschluß (D+) mit dem Signaleingang einer Sicherheitsstufe (76) verbunden ist, welche den Leistungsschalter (21) im Regler sperrt, wenn bei Unterbrechung der Ladeleitung die Generatorspannung ($u_g$) am Fehlerer-

kennungsanschluß (D+) auf einen vorgegebenen Wert ansteigt.

11. System nach Anspruch 10, dadurch gekennzeichnet, daß die Sicherheitsstufe (76) auf die Mittel zur Schwellwertbildung eines den Leistungsschalter (21) steuernden Komparators (66) einwirkt, dessen einer Signaleingang mit einem batteriespannungsabhängigen Sensingpunkt (57 bzw. B+) und dessen anderer Signaleingang mit einem Referenzspannungsteiler (64) verbunden ist.

12. System nach einem der vorgehenden Ansprüche, dadurch gekennzeichnet, daß die Anzeigevorrichtung (59) von einem Komparator (94) angesteuert ist, dessen einer Signaleingang mit der Spannungsversorgung und dessen anderer Signaleingang mit einer anderen, den Sensinganschluß nicht enthaltenden batteriespannungsabhängigen Leitung (58) verbunden ist.

13. System nach Anspruch 12, bei welchem die von der Batterie abgekehrte Klemme (57) des Zündschalters (56) über die batteriespannungsabhängige Leitung (58) mit der Ladekontrolleinrichtung und über eine zweite Leitung (60) mit der Erregerwicklung (16) des Generators verbunden ist, dadurch gekennzeichnet, daß der eine Eingang des Komparators (94) mit der batteriespannungsabhängigen Leitung (58) und der zweite Eingang mit der zweiten Leitung (60) verbunden ist.

14. System nach Anspruch 12, dadurch gekennzeichnet, daß der eine Eingang des Komparators (94) an den vom Generator zur Batterie (52) führenden Ladestromkreisteil (49) und der andere Signaleingang mit einem batteriespannungsabhängigen Strompfad, insbesondere dem vom Zündschalter (56) zur Erregerwicklung (16) des Generators führenden Leitung (60), verbunden ist.

**Claims**

1. A battery charging system, particularly for motor vehicles, comprising an alternating-current generator (10), containing an exciter system and a rectifier system, for feeding an electric battery (52), and a semi-conductor voltage regulator (20) for keeping the generator voltage constant, which voltage regulator has a power switch (21) located in series with the exciter winding (16), and a charging control device having a signal transmitter (82) for detecting the switching state of the power switch (21), a first threshold stage (67) for detecting a minimum value of the generator voltage and a second threshold stage (69) for detecting a voltage ($u_r + \Delta u_2$), which is above the set regulating value ($u_r$) by a certain value ($\Delta u_2$) at a sensing point of the system, the output signals of which threshold stages are supplied to a logic circuit which drives an indicating device (59), characterised in that one signal input of the first threshold stage (67) is connected to a fault detection connection (D+), which is decoupled from the battery voltage and which is fed by detection diodes (14) in the exciter system of the alternating-current generator (10), and one signal input of the second threshold stage (69) is connected to a sensing connection (60 or B+) which is affected by the battery voltage.

2. A system according to Claim 1, characterised in that the exciter winding (16) of the generator is fed by the battery (52) even during operation and the fault detection connection (D+) is supplied with voltage only by a set of detection diodes (14) which are connected in the manner of a half bridge rectifier.

3. A system according to Claim 1 or 2, characterised in that the first threshold stage (67) responds at a generator voltage ($u_g$) minimum value which is above the voltage value ($u_{rmax}$) caused solely by the remanence of the exciter system at maximum revolutions of the generator.

4. A system according to one of Claims 1 to 3, characterised in that the output signals of the first threshold stage (67) and of the signal transmitter (82) used for detecting the switching state of the power switch (21) are supplied to a logical AND circuit (85) which triggers an indication only when the power switch (21) is in its on state and the generator voltage ($u_g$) is no greater than the threshold value of the first threshold stage (67).

5. A system according to one of Claims 1 to 4, characterised in that the output signals of the first threshold stage (67) and of another threshold stage (68), which is used for detecting a sensing voltage ($u_s$) which is below the set regulating value ($u_r$) by a certain value ($\Delta u_1$), are supplied to a logical AND circuit (80) which triggers an indication only if the generator voltage ($u_g$) is no greater than the threshold value of the first threshold stage (67) and the sensing voltage ($u_s$) is smaller than the threshold value of the further threshold stage (68).

6. A system according to Claims 4 and 5, characterised in that the two AND circuits (85, 80) of the first threshold stage (67) with the signal transmitter (82) and the further threshold stage (68) is followed by a time-delay section (86), the delay time of which corresponds at least to the rise time of the voltage at the fault detection connection (D+) from the minimum possible remanence voltage to the maximum possible remanence voltage at minimum operational revolutions of the generator.

7. A system according to Claim 6, characterised in that an AND circuit (83) of the signal transmitter (82) with the threshold stage (69) detecting overvoltages at the battery or at a sensing point is also followed by the time-delay section (86).

8. A system according to one of the preceding claims, characterised in that the fault detection connection (D+) of the generator is connected to the signal input of a further threshold stage (70) which drives the indicating device (59) and the threshold value of which is above that of the threshold stage (69) detecting the sensing overvoltage.

9. A system according to Claim 8, characterised in that the fault detection connection (D+) is connected to the signal input of a further threshold stage (71), the threshold value of which is greater than that of the threshold stage (70) which drives the indicating device (59) and that the output signals of these two threshold stage (70, 71) are supplied to an AND circuit (84) which suppresses an indication if the further threshold stage (71) has responded.

10. A system according to one of the preceding claims, characterised in that the fault detection connection (D+) is connected to the signal input of a safety stage (76) which disables the power switch (21) in the regulator if the generator voltage ($u_g$) at the fault detection connection (D+) rises to a pre-set value with an interruption of the charging line.

11. A system according to Claim 10, characterised in that the safety stage (76) acts on the means for forming the threshold value of a comparator (66) which controls the power switch (21) and the one signal input of which is connected to a sensing point (57 or B+), which depends on the battery voltage, and the other signal input of which is connected to a reference voltage divider (64).

12. A system according to one of the preceding claims, characterised in that the indicating device (59) is driven by a comparator (94), one signal input of which is connected to the voltage supply and the other signal input of which is connected to another battery-voltage-dependent line (58) which does not contain the sensing connection.

13. A system according to Claim 12, in which the terminal (57), which is not connected to the battery, of the ignition switch (56) is connected via the battery-voltage-dependent line (58) to the charging control device and via a second line (60) to the exciter winding (16) of the generator, characterised in that one input of the comparator (94) is connected to the battery-voltage-dependent line (58) and the second input is connected to the second line (60).

14. A system according to Claim 12, characterised in that one input of the comparator (94) is connected to the charging circuit part (49) leading from the generator to the battery (52) and the other signal input is connected to a battery-voltage-dependent current path, especially to the line (60) leading from the ignition switch (56) to the exciter winding (16) of the generator.

## Revendications

1. Système de charge de batterie, notamment pour véhicules automobiles, avec un générateur de courant alternatif (10), comportant un système excitateur et un système redresseur, pour l'alimentation d'une batterie électrique (52), avec un régulateur de tension à semiconducteur (20) pour maintenir constante la tension du générateur, et qui comporte un commutateur de puissance (21) placé en série par rapport à l'enroulement d'excitation (16), et avec un dispositif de contrôle de charge qui comporte un émetteur de signaux (82) pour détecter l'état de commutation du commutateur de puissance (21), un premier étage à valeur de seuil (67) pour détecter une valeur minimale de la tension du générateur, et un second étage à valeur de seuil (69) pour détecter une tension ($u_r + \Delta u_2$), dépassant d'une valeur déterminée ($\Delta u_2$) la valeur de consigne de régulation ($u_r$), en un point de détection du système, dont les signaux de sortie sont appliqués à un circuit de combinaison logique, qui commande un dispositif indicateur (59), système caractérisé en ce que l'une des entrées de signaux du premier étage à valeur de seuil (67) est reliée à un raccordement d'identification de défaut (D+) découplé de la tension de batterie et alimenté à partir de diodes de détection (14) dans le système d'excitation du générateur du courant alternatif (10), tandis qu'une des entrées de signaux du second étage à valeur de seuil (69) est reliée à un raccordement de détection (60 ou bien B+) influencé par la tension de batterie.

2. Système selon la revendication 1, caractérisé en ce que l'enroulement d'excitation (16) du générateur est également alimenté en fonctionnement par la batterie (52) et que seul le raccordement (D+) d'identification de défaut est alimenté en tension par l'intermédiaire d'un jeu de diodes de détection (14) branché à la façon d'un demi-redresseur en pont.

3. Système selon l'une des revendications 1 ou 2, caractérisé en ce que le premier étage à valeur de seuil (67) réagit pour une valeur minimale de la tension ($u_g$) du générateur, qui se situe au-dessus de la valeur de tension ($u_{rmax}$) provenant uniquement de la rémanence du système d'excitation pour la vitesse de rotation maximale du générateur.

4. Système selon une des revendications 1 à 3, caractérisé en ce que les signaux de sortie du premier étage à valeur de seuil (67) et de l'émetteur de signaux (82) servant à détecter l'état de commutation du commutateur de puissance (21) sont appliqués à une combinaison logique ET (85) qui ne déclenche une indication que lorsque le commutateur de puissance (21) est conducteur et que la tension ($u_g$) du générateur n'est pas supérieure à la valeur de seuil du premier étage à valeur de seuil (67).

5. Système selon une des revendications 1 à 4, caractérisé en ce que les signaux de sortie du premier étage à valeur de seuil (67) et d'un autre étage à valeur de seuil (68) qui sert à détecter une tension de détection ($u_s$) inférieure d'une valeur déterminée ($\Delta u_1$) à la valeur de consigne de régulation ($u_r$), sont appliqués à une combinaison logique ET (80) qui ne déclenche une indication que lorsque la tension ($u_g$) du générateur n'est pas supérieure à la valeur de seuil du premier étage à valeur de seuil (67) et que la tension de détection ($u_s$) est inférieure à la valeur de seuil de l'autre étage à valeur de seuil (68).

6. Système selon les revendications 4 et 5, caractérisé en ce qu'un organe de temporisation (86) est branché à la suite des deux combinaisons logiques ET (85, 80) du premier étage à valeur de seuil (67) avec l'émetteur de signaux (82) et du second étage à valeur de seuil (68), le temps de retard de cet organe correspondant au moins au temps d'accroissement de la tension au raccordement de détection de défauts (D+) depuis la tension minimale possible de rémanence jusqu'à la tension maximale possible de rémanence pour une vitesse de fonctionnement minimale du générateur.

7. Système selon la revendication 6, caractérisé en ce que l'organe de temporisation (86) est également branché à la suite d'une combinaison logique ET (83) de l'émetteur de signaux (82) avec l'étage à valeur de seuil (69) détectant les surtensions sur la batterie ou bien en un point de détection.

8. Système selon une des précédentes revendications, caractérisé en ce que le raccordement de détection de défauts (D+) du générateur, est relié à l'entrée de signaux d'un autre étage à valeur de seuil (70) commandant le dispositif indicateur (59), et dont la valeur de seuil se situe au-dessus de celle de l'étage à valeur de seuil (69) détectant la surtension de détection.

9. Système selon la revendication 8, caractérisé en ce que le raccordement de détection de défauts (D+) est relié avec l'entrée de signaux d'un autre étage à valeur de seuil (71) dont la valeur de seuil est supérieure à celle de l'étage à valeur de seuil (70) commandant le dispositif indicateur (59), et que les signaux de sortie de ces deux étages à valeur de seuil (70, 71) sont appliqués à une combinaison logique ET (84) qui supprime une indication lorsque l'autre étage à valeur de seuil (71) a réagi.

10. Système selon une des précédentes revendications, caractérisé en ce que le raccordement de détection de défauts (D+) est relié à l'entrée de signaux d'un étage de sécurité (76) qui ferme le commutateur de puissance (21) dans le régulateur lorsqu'en cas d'interruption du conducteur de charge, la tension ($u_g$) du générateur au raccordement de détection de défauts (D+) s'élève jusqu'à une valeur prédéfinie.

11. Système selon la revendication 10, caractérisé en ce que l'étage de sécurité (76) agit sur les moyens assurant l'établissement de la valeur de seuil d'un comparateur (66) commandant le commutateur de puissance (21) et dont l'une des entrées de signaux est reliée à un point de détection (57 ou bien B+) dépendant de la tension de la batterie, tandis que l'autre entrée de signaux de ce comparateur, est reliée à un diviseur de tension de référence (64).

12. Système selon une des précédentes revendications, caractérisé en ce que le dispositif indicateur (59) est commandé par un comparateur (94), dont une entrée de signaux est reliée à l'alimentation en tension et dont l'autre entrée de signaux est reliée à un autre conducteur (58) dépendant de la tension de la batterie, et ne comprenant pas le raccordement de détection.

13. Système selon la revendication 12, dans lequel la borne (57), opposée à la batterie, du commutateur d'allumage (56) est reliée par l'intermédiaire du conducteur (58) dépendant de la tension de la batterie, au dispositif de contrôle de charge, et, par l'intermédiaire d'un second conducteur (60), avec l'enroulement d'excitation (16) du générateur, système caractérisé en ce que l'une des entrées du comparateur (94) est reliée au conducteur (58) dépendant de la tension de la batterie, tandis que la seconde entrée est reliée au second conducteur (60).

14. Système selon la revendication 12, caractérisé en ce que l'une des entrées du comparateur (94) est reliée à la partie du circuit de charge (49) allant du générateur à la batterie (52), tandis que l'autre entrée de signaux est reliée à un trajet de courant dépendant de la tension de la batterie, notamment avec le conducteur (60) allant du commutateur d'allumage (56) vers l'enroulement d'excitation (16) du générateur.

Fig. 1

Fig. 2